(19) Europäisches Patentamt
European Patent Office
Office européen des brevets

(11) Veröffentlichungsnummer : **0 213 393 B1**

(12) # EUROPÄISCHE PATENTSCHRIFT

(45) Veröffentlichungstag der Patentschrift : **19.10.88**

(51) Int. Cl.[4] : **C 07 F 9/40**, A 01 N 57/18

(21) Anmeldenummer : **86110412.3**

(22) Anmeldetag : **28.07.86**

(54) **Phosphonsäureester.**

(30) Priorität : **07.08.85 DE 3528265**

(43) Veröffentlichungstag der Anmeldung : **11.03.87 Patentblatt 87/11**

(45) Bekanntmachung des Hinweises auf die Patenterteilung : **19.10.88 Patentblatt 88/42**

(84) Benannte Vertragsstaaten : **AT BE CH DE FR GB IT LI NL**

(56) Entgegenhaltungen :
**EP-A- 0 044 214**
**EP-A- 0 058 864**

(73) Patentinhaber : **BAYER AG**
**Konzernverwaltung RP Patentabteilung**
**D-5090 Leverkusen 1 Bayerwerk (DE)**

(72) Erfinder : **Krüger, Bernd-Wieland, Dr.**
**Sillerstrasse 49**
**D-5600 Wuppertal 11 (DE)**
Erfinder : **Baasner, Bernd, Dr.**
**Hamberger Strasse 27 d**
**D-5090 Leverkusen 3 (DE)**
Erfinder : **Hagemann, Hermann, Dr.**
**Kandinskystrasse 52**
**D-5090 Leverkusen 1 (DE)**
Erfinder : **Homeyer, Bernhard, Dr.**
**Obere Strasse 28**
**D-5090 Leverkusen 3 (DE)**
Erfinder : **Becker, Benedikt, Dr.**
**Metzkausener Strasse 14**
**D-4020 Mettmann (DE)**

**EP 0 213 393 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue O-(1-Cyano-2-fluor-alkyl)-S-alkyl-(di)-thiophosphonsäureester, ein Verfahren zu ihrer Herstellung und ihre Verwendung als Schädlingsbekämpfungsmittel, insbesondere als Insektizide, Akarizide und Nematizide sowie Zwischenprodukte zu ihrer Herstellung.

Es ist bereits bekannt geworden, daß bestimmte O-(2,2,2-Trihalogenethyl)-S-(alkyl)-(di)thiophosphorsäureester, wie z. B. des O-(Ethyl)-O-(2,2,2-trifluorethyl)-S-(n-propyl)-dithiophosphorsäureester (vgl. DE-OS 2 732 930) sowie O-(1-Cyanoalkyl)-S-(alkyl)-O(alkyl)-thiophosphor(n)säure-ester (vgl. EP-A-44 214 und EP-A-58 864) zur Schädlingsbekämpfung verwendet werden können.

Die insektizide und akarizide Wirkung der bekannten Verbindungen ist jedoch, insbesondere bei niedrigen Wirkstoffkonzentrationen und Aufwandmengen, nicht immer ganz zufriedenstellend.

Es wurden neue α-Cyano-(di)thiophosphonsäureester der allgemeinen Formel (I)

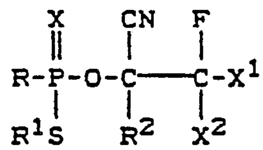

(I)

gefunden, in welcher

X für Sauerstoff oder Schwefel steht,

R und $R^1$ gleich oder verschieden sind und für Alkyl stehen,

$R^2$ für Wasserstoff oder gegebenenfalls substituiertes Alkyl steht und

$X^1$ und $X^2$ gleich oder verschieden sind und für Halogen, Wasserstoff oder gegebenenfalls substituiertes Alkyl stehen.

Man erhält die neuen Verbindungen der allgemeinen Formel (I), wenn man (Di)Thiophosphonsäureesterhalogenide der allgemeinen Formel (II)

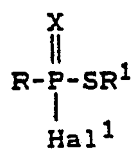

(II)

in welcher

R, $R^1$ und X die oben angegebene Bedeutung haben und

$Hal^1$ für Halogen steht,

mit β-Fluoralkanolderivaten der allgemeinen Formel (III)

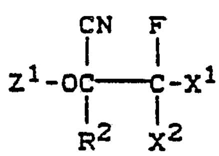

(III)

in welcher

$R^2$, $X^1$ und $X^2$ die oben angegebene Bedeutung haben und

$Z^1$ für Wasserstoff oder ein Äquivalent eines Alkalimetall- oder Ammoniums steht,

gegebenenfalls in Gegenwart von Säureakzeptoren und gegebenenfalls in Gegenwart von Verdünnungsmitteln umsetzt.

Die neuen fluorierten α-Cyano(di) thiophosphonsäureester der allgemeinen Formel (I) zeichnen sich durch hohe Wirksamkeit gegen tierische Schädlinge, insbesondere durch hohe insektizide und akarizide Wirksamkeit aus. Die erfindungsgemäßen Wirkstoffe können außerdem zur Bekämpfung von Nematoden eingesetzt werden. Einige Verbindungen zeigen darüberhinaus auch eine fungizide Wirkung, z. B. gegen Pyricularia oryzae.

Überraschenderweise zeigen die fluorierten Verbindungen der allgemeinen Formel (1) erheblich günstigere insektizide und akarizide Eigenschaften als entsprechende bekannte Verbindungen.

In den allgemeinen Formeln ist der Alkylrest R geradkettig oder verzweigt und enthält vorzugsweise 1 bis 6, insbesondere 1 bis 4 und ganz besonders bevorzugt 1 oder 2 Kohlenstoffatome. Beispielhaft seien Methyl, Ethyl, n- und i-Propyl sowie n-, i-, s- und t-Butyl aufgeführt.

Der Alkylrest $R^1$ ist geradkettig oder verzweigt und enthält vorzugsweise 1 bis 6, insbesondere 1 bis 4, ganz besonders bevorzugt 3 oder 4 Kohlenstoffatome, wobei die verzweigten Propyl- und Butylreste besonders hervorzuheben sind. Beispielhaft seien Methyl, Ethyl, n- und i-Propyl und n-, i-, s- und t-Butyl genannt.

Die gegebenenfalls substituierten Alkylreste $R^2$, $X^1$ und $X^2$ sind geradkettig oder verzweigt und enthalten vorzugsweise 1 bis 6, insbesondere 1 bis 4 und ganz besonders bevorzugt 1 oder 2 Kohlenstoffatome. Beispielsweise seien Methyl, Ethyl, n- und i-Propyl sowie n-, i-, s- und t-Butyl genannt. Vorzugsweise sind die Alkylreste $R^2$, $X^1$ und $X^2$ unsubstituiert.

Als Halogen $X^1$ und $X^2$ steht Fluor, Chlor, Brom oder Iod, vorzugsweise Fluor und Chlor, insbesondere Fluor, Bevorzugt stehen $X^1$ und $X^2$ gleichzeitig für Fluor.

In den allgemeinen Formeln stehen die Äquivalente eines Alkalimetallions $Z^1$ für ein Natrium-, Kalium- oder Lithiumion, vorzugsweise für ein Natrium- oder Kaliumion.

$Hal^1$ bedeutet Halogen, vorzugsweise Chlor, Brom oder Iod, insbesondere Chlor oder Brom, ganz besonders bevorzugt Chlor.

In den allgemeinen Formeln steht X bevorzugt für Schwefel.

Die gegebenenfalls substituierten Alkylreste $R^2$, $X^1$ und $X^2$ können einen oder mehrere, vorzugsweise 1 bis 3, insbesondere 1 oder 2 gleiche oder verschiedene Substituenten tragen. Als Substituenten seien beispielhaft aufgeführt: Alkoxy mit vorzugsweise 1 bis 4, insbesondere 1 oder 2 Kohlenstoffatomen, wie Methoxy, Ethoxy, n- und i-Propyloxy und n-, i- und t-Butyloxy ; Alkylthio mit vorzugsweise 1 bis 4, insbesondere 1 oder 2 Kohlenstoffatomen, wie Methylthio, Ethylthio, n- und i-Propylthio und n- und t-Butylthio ; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl ; Hydroxy ; Halogen, vorzugsweise Fluor, Chlor, Brom und Iod, insbesondere Chlor und Brom ; Cyano ; Nitro.

Die Erfindung betrifft vorzugsweise Verbindungen der allgemeinen Formel (I), in welcher

X für Sauerstoff oder Schwefel (vorzugsweise Schwefel) steht,

R und $R^1$ gleich oder verschieden sind und für Alkyl mit 1 bis 6 Kohlenstoffatomen steht,

$R^2$ für Wasserstoff oder gegebenenfalls durch Halogen (vorzugsweise Chlor) substituiertes Alkyl mit 1 bis 6 Kohlenstoffatomen steht und

$X^1$ und $X^2$ gleich oder verschieden sind und für Halogen (vorzugsweise Fluor) oder gegebenenfalls substituiertes (vorzugsweise unsubstituiertes) Alkyl mit 1 bis 6 Kohlenstoffatomen steht.

Die Erfindung betrifft insbesondere Verbindungen der allgemeinen Formel (I), in welcher

X für Sauerstoff oder Schwefel (vorzugsweise Schwefel) steht,

R und $R^1$ gleich oder verschieden sind und für Alkyl mit 1 bis 4 Kohlenstoffatomen steht,

$R^2$ für Wasserstoff oder gegebenenfalls durch Halogen (vorzugsweise Chlor) substituiertes Methyl oder Ethyl steht und

$X^1$ und $X^2$ gleich oder verschieden sind und für Halogen (vorzugsweise Fluor), Methyl oder Ethyl stehen.

Besonders bevorzugt sind Verbindungen der Formel (I), in denen

X für Sauerstoff oder Schwefel (vorzugsweise Schwefel)

R für Methyl oder Ethyl,

$R^1$ für n- oder i-Propyl oder für i-, s- oder t-Butyl steht,

$R^2$ für Wasserstoff, Methyl oder Ethyl (vorzugsweise Wasserstoff oder Methyl) und

$X^1$ und $X^2$ gleich oder verschieden sind und für Methyl oder Ethyl oder für Fluor stehen.

Verwendet man als Ausgangsstoffe Ethan-S-(n-propyl)-dithio-phosphonsäureesterchlorid und 1-Cyano-2-fluor-2-methylpropanol, so kann die Reaktion dieser Verbindungen durch folgendes Formelschema skizziert werden :

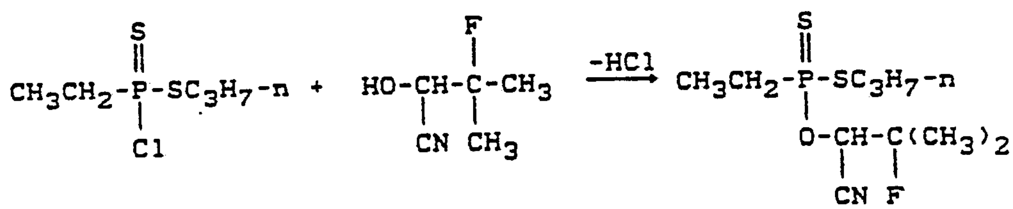


Die als Ausgangsstoffe verwendeten Verbindungen der allgemeinen Formel (III) sind bekannt oder können nach bekannten Verfahren und Methoden hergestellt werden (vgl. US-PS 2 662 915 ; J. Chem. Soc. 1951, 2329; J. Chem. Soc. 1963, 3462).

Als Beispiele für die Verbindungen der allgemeinen Formel (III) seien genannt :

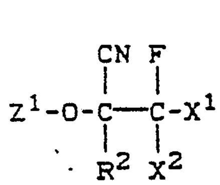

(III)

| $Z^1$ | $R^2$ | $X^1$ | $X^2$ |
|---|---|---|---|
| H | $CH_3$ | F | F |
| H | $C_2H_5$ | F | F |
| H | $C_3H_7$ | F | F |
| H | $i-C_3H_7$ | F | F |
| H | H | F | F |
| H | $CF_3$ | F | F |
| H | $CCl_3$ | Cl | Cl |
| H | $CFCl_2$ | Cl | Cl |
| H | $CF_2Cl$ | F | Cl |
| H | $CF_2Cl$ | Cl | Cl |
| H | $CH_2F$ | H | F |
| H | $CH_3$ | H | H |
| H | $CH_2Cl$ | H | H |
| H | $CF_2Cl$ | F | F |
| H | $CCl_3$ | F | F |
| H | H | F | Cl |
| H | H | $CH_3$ | $CH_3$ |
| H | H | $CH_3$ | $C_2H_5$ |
| H | H | $CH_3$ | $C_3H_7$ |
| H | H | $CH_3$ | $i-C_3H_7$, |

sowie deren Natrium-, Kalium-, Lithium- oder Ammoniumsalze.

Die als Ausgangsstoffe zu verwendenden (Di)Thiophosphonsäureesterhalogenide der allgemeinen Formel II sind bekannt und nach allgemein bekannten Verfahren und Methoden erhältlich (vgl. EP-A 25 270 und DE-A-2 702 049).

Als Beispiel seien genannt : S-Methyl-, S-Ethyl-, S-n-Propyl-, S-i-Propyl, S-n-Butyl-, S-i-Butyl-, S-sec.-Butyl-, S-(tert.-Butyl)-methan(di)thiophosphonsäurechlorid bzw. -bromid ;

S-Methyl-, S-Ethyl-, S-n-Propyl-, S-i-Propyl, S-n-Butyl-, S-i-Butyl-, S-sec.-Butyl-, S-(tert.-Butyl)-ethan(di)thiophosphonsäurechlorid bzw. -bromid ;

S-Methyl-, S-Ethyl-, S-n-Propyl-, S-i-Propyl-, S-n-Butyl-, S-i-Butyl-, S-sec.-Butyl-, S-(tert.-Butyl)-n-propan(di)-thiophosphonsäurechlorid bzw. -bromid ;

S-Methyl-, S-Ethyl-, S-n-Propyl-, S-i-Propyl-, S-n-Butyl-, S-i-Butyl-, S-sec.-Butyl-, S-(tert.-Butyl)-i-propan(di)-thiophosphonsäurechlorid bzw. -bromid ;

S-Methyl-, S-Ethyl-, S-n-Propyl-, S-i-Propyl-, S-n-Butyl-, S-i-Butyl-, S-sec.-Butyl-, S-(tert.-Butyl)-n-butan(di)-thiophosphonsäurechlorid bzw. -bromid ;

S-Methyl-, S-Ethyl-, S-n-Propyl-, S-i-Propyl-, S-n-Butyl-, S-i-Butyl-, S-sec.-Butyl-, S-(tert.-Butyl)-i-butan(di)-thiophosphonsäurechlorid bzw. -bromid.

Als Verdünnungsmittel für das erfindungsgemäße Verfahren kommen praktisch alle inerten organischen Lösungsmittel infrage. Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether, wie Diethyl- und Dibutylether, Glycoldimethylether und Diglycoldimethylether, Tetrahydrofuran und Dioxan, Ketone, wie Aceton, Methylethyl-, Methylisopropyl- und Methylisobutylketon, Ester, wie Essigsäuremethylester und -ethylester, Nitrile, wie z. B. Acetonitril und Propionitril, Amide, wie z. B. Dimethylformamid, Dimethylacetamid und N-Methylpyrrolidon, sowie Dimethylsulfoxid, Tetramethylensulfon und Hexamethylphosphorsäuretriamid.

Das Verfahren kann gegebenenfalls in Gegenwart von Säureakzeptoren durchgeführt werden. Als Säureakzeptoren können alle üblichen Säurebindemittel Verwendung finden. Besonders bewährt haben sich Alkalicarbonate und -alkoholate, wie Natrium- und Kaliumcarbonat, Natrium- und Kaliummethylat bzw. -ethylat, ferner aliphatische, aromatische oder heterocyclische Amine, beispielsweise Triethylamin, Trimethylamin, Dimethylanilin, Dimethylbenzylamin und Pyridin.

Das erfindungsgemäße Verfahren wird im allgemeinen bei Temperaturen zwischen —30°C und

+110°C durchgeführt. Bevorzugt wird der Bereich zwischen 20°C und 80°C.

Die Umsetzungen werden im allgemeinen bei Normaldruck durchgeführt. Die Aufarbeitung geschieht nach üblichen Methoden.

Zur Durchführung des erfindungsgemäßen Verfahrens setzt man auf 1 mol der Verbindung der allgemeinen Formel (II) 1 bis 1,6 mol, vorzugsweise 1,1 bis 1,4 mol, β-Fluorcyanhydrin-Derivat der allgemeinen Formel (III) ein.

Die neuen Verbindungen fallen zum Teil in Form von Ölen an, die sich zum Teil nicht unzersetzt destillieren lassen, jedoch durch sogenanntes « Andestillieren », d. h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören :

Aus der Ordnung der Isopoda z. B. Oniscus asellus, Armadillidium vulgare, Porcellio scaber.

Aus der Ordnung der Diplopoda z. B. Blaniulus guttulatus.

Aus der Ordnung der Chilopoda z. B. Geophilus carpophagus, Scutigera spec.

Aus der Ordnung der Symphyla z. B. Scutigerella immaculata.

Aus der Ordnung der Thysanura z. B. Lepisma saccharina.

Aus der Ordnung der Collembola z. B. Onychiurus armatus.

Aus der Ordnung der Orthoptera z. B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z. B. Forficula auricularia.

Aus der Ordnung der Isoptera z. B. Reticulitermes spp.

Aus der Ordnung der Anoplura z. B. Phylloxera vastatrix, Pemphigus spp., Pediculus humanus corporis, Haematopinus spp., Linognathus spp.

Aus der Ordnung der Mallophaga z. B. Trichodectes spp., Damalinea spp.

Aus der Ordnung der Thysanoptera z. B. Hercinothrips femoralis, Thrips tabaci.

Aus der Ordnung der Heteroptera z. B. Eurygaster spp., Dysdercus intermedius, Piesma quadrata, Cimex lectularius, Rhodnius prolixus, Triatoma spp.

Aus der Ordnung der Homoptera z. B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z. B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z. B. Anobium punctatum, Rhizopertha dominica, Bruckidius obtecturs, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica. Aus der Ordnung der Hymenoptera z. B. Diprion spp., Hoplocampa spp., Lasius spp., Monomorium pharaonis, Vespa spp. Aus der Ordnung der Diptera z. B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hypoderma spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z. B. Xenopsylla cheopis, Ceratophyllus spp.

Aus der Ordnung der Arachnida z. B. Scorpio maurus, Latrodectus mactans.

Aus der Ordnung der Acarina z. B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u. ä., sowie ULV-Kalt- und Warmnebel-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage : Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser ; mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgas, wie Halogenkohlenwasserstoffe sowie Butan, Propan, Stickstoff und Kohlendioxid ; als feste Trägerstoffe kommen in Frage : z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate ; als feste Trägerstoffe für Granulate kommen in Frage : z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel ; als Emulgier und/oder schaumerzeugende Mittel kommen in Frage : z. B. nichtionogene und anionische Emulgatoren, wie Polyoxyethylen-Fettsäure-Ester, Polyoxyethylen-Fettalkohol-Ether, z. B. Alkylarylpolyglykol-Ether, Alkylsulfonate, Alkylsulfate, Arylsulfonate sowie Eiweißhydrolysate ; als Dispergiermittel kommen in Frage : z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z. B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u. a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemäßen Wirkstoffe eignen sich auch zur Bekämpfung von Parasiten auf dem Gebiet der Tierhaltung und Viehzucht, wobei durch die Bekämpfung der Schädlinge bessere Ergebnisse, z. B. höhere Milchleistungen, höheres Gewicht, längere lebensdauer usw. erreicht werden können.

Die Anwendung der erfindungsgemäßen Wirkstoffe geschieht auf diesen Gebieten in bekannter Weise, wie durch äußerliche Anwendung in Form beispielsweise des Tauchens (Dippen), Sprühens (Sprayen), Aufgießens (pour-on and spot-on) und des Einpuderns.

Die Wirksamkeit der erfindungsgemäßen Verbindungen sei anhand der folgenden Beispiele erläutert.

Als Vergleichsverbindungen wurden eingesetzt :

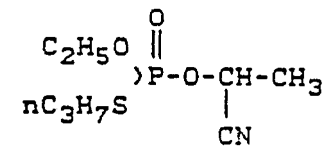

(A)

vgl. EP-A 44 214 (Beispiel 4)

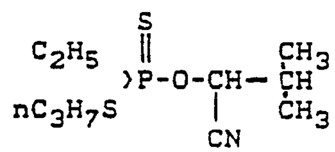

(B)

vgl. EP-A 58 864 (Beispiel 67)

## Beispiel A

Grenzkonzentrations-Test/Bodeninsekten

Testinsekt : Phorbia antiqua-Maden (im Boden)
Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten lebel wie bei der unbehandelten Kontrolle.

Bei diesem Test zeigten z.B. die Verbindungen der Herstellungsbeispiele 1 und 3 bei einer beispielhaften Konzentration von 2,5 ppm eine Abtötung von 100 bzw. 95 %, während bei der gleichen Konzentration die Vergleichsverbindung (A) keine Abtötung (0 %) ergab.

## Beispiel B

Grenzkonzentrations-Test/Bodeninsekten

Testinsekt : Diabrotica balteata — Larven im Boden
Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in 0,5 l Töpfe und läßt diese bei 20 °C stehen.

Sofort nach dem Ansatz werden je Topf 6 vorgekeimte Maiskörner gelegt. Nach 2 Tagen werden in den behandelten Boden die entsprechenden Testinsekten gesetzt. Nach weiteren 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten z.B. bei einer Konzentration von 1,25 ppm die Verbindungen der Herstellungsbeispiele 1 und 3 einen Abtötungsgrad von 100 %, während bei der gleichen Konzentration die Vergleichsverbindung (A) keine Abtötung (0 %) ergab.

## Beispiel C

Grenzkonzentrations-Test/Nematoden

Testnematode : Meloidogyne incognita
Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27 °C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Bei diesem Test zeigten z. B. die Verbindungen der Herstellungsbeispiele 1 und 3 bei einer Konzentration von 5 ppm einen Abtötungsgrad von 95 %, während bei der gleichen Konzentration die Vergleichsverbindungen (A) und (B) einen Abtötungsgrad von 0 % ergaben.

## Beispiel D

Grenzkonzentrations-Test/Nematoden

Testnematode : Globodera rostochiensis
Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, pflanzt Kartoffeln ein und hält die Töpfe bei einer Gewächshaus-Temperatur von 18 °C.

Nach sechs Wochen werden die Kartoffelwurzeln auf Zysten untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Bei diesem Test zeigten z. B. bei einer Wirkstoffkonzentration von 20 ppm die Verbindungen der Herstellungsbeispiele 1 und 3 einen Abtötungsgrad von 95 % bzw. 100 %, während die Vergleichsverbindung (B) bei der gleichen Konzentration einen Wirkungsgrad von 0 % ergab.

## Beispiel E

Drosophila-Test

Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

1 $cm^3$ der Wirkstoffzubereitung wird auf eine Filterpapierscheibe (7 cm Durchmesser) aufpipettiert. Man legt diese naß auf die Öffnung eines Glasgefäßes, in dem sich 50 Taufliegen (Drosophila melanogaster) befinden und bedeckt es mit einer Glasplatte.

Nach der gewünschten Zeit bestimmt man die Abtötung in %. Dabei bedeutet 100 %, daß alle Fliegen abgetötet wurden ; 0 % bedeutet, daß keine Fliegen abgetötet wurden.

Bei diesem Test zeigten z. B. bei einer Konzentration von 0,001 % nach 1 Tag die Verbindung des Herstellungsbeispiels 3 eine Abtötung von 100 %, während die Vergleichsverbindung (A) bei der gleichen Konzentration eine Abtötung von 0 % ergab.

Beispiel F

Myzus-Test

Lösungsmittel : 7 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea), die stark von der Pfirsichblattlaus (Myzus persicae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Blattläuse abgetötet wurden ; 0 % bedeutet, daß keine Blattläuse abgetötet wurden.

Bei diesem Test zeigte z. B. bei einer Wirkstoffkonzentration von 0,01 % nach 1 Tag die Verbindung des Herstellungsbeispiels 3 eine Abtötung von 95 %, während die Vergleichsverbindung (B) bei der gleichen Konzentration keine Abtötung ergab.

Beispiel G

Doralis-Test

Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnentriebe (Vicia faba), die stark von der schwarzen Bohnenlaus (Doralis fabae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Blattläuse abgetötet wurden ; 0 % bedeutet, daß keine Blattläuse abgetötet wurden.

Bei diesem Test zeigte z. B. bei einer Wirkstoffkonzentration von 0,1 % nach 4 Tagen die Verbindung des Herstellungsbeispiels 1 eine Abtötung von 100 %, während die Vergleichsverbindung (B) bei der gleichen Konzentration eine Abtötung von 0 % ergab.

Die Herstellung der erfindungsgemäßen Verbindungen soll anhand des folgenden Beispiels erläutert werden :

Beispiel 1

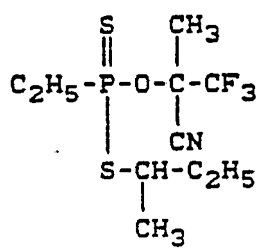

8,3 g (0,06 mol) 1-Cyano-1-methyl-2,2,2-trifluor-ethanol und 8,3 g Kaliumcarbonat (0,06 mol) werden in 100 ml Acetonitril vorgelegt und bei 5 bis 10 °C Innentemperatur mit 10,8 g (0,05 mol) Ethandithiophosphonsäure-chlorid-S-sek.-butylester — gelöst in 20 ml Acetonitril — versetzt. Man erwärmt 1 d auf 60 °C, dampft im Vakuum ein, nimmt den Rückstand in $CH_2Cl_2$ auf, wäscht die organische Phase mit Wasser, trocknet und entfernt flüchtige Bestandteile im Vakuum. Als Rückstand erhält man 14,2 g (89 % der Theorie) Ethandithiophosphonsäure-O-(1-cyano-1-trifluormethyl) ethylester-S-sek.-butyl-ester mit dem Brechungsindex $n_D^{20}$ : 1,4772.

Analog Beispiel 1 erhält man die folgenden Verbindungen der allgemeinen Formel (I)

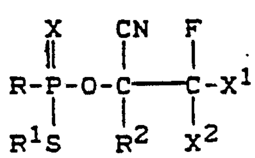

(I)

| Beispiel Nr. | R | $R^1$ | X | $R^2$ | $X^1$ | $X^2$ | phys. Daten ($n_D^{20}$) |
|---|---|---|---|---|---|---|---|
| 2 | $C_2H_5$ | sek.-$C_4H_9$ | S | H | $CH_3$ | $CH_3$ | |
| 3 | $C_2H_5$ | sek.-$C_4H_9$ | S | H | $CH_3$ | $C_2H_5$ | 1,5069 |
| 4 | " | " | " | " | " | $CH_3$ | |
| 5 | $CH_3$ | " | " | $CH_3$ | F | F | $Kp_{0,1}$ 65-76°C |
| 6 | $C_2H_5$ | n-$C_3H_7$ | " | " | " | " | $Kp_{0,2}$ 80°C |
| 7 | " | i-$C_3H_7$ | " | " | " | " | $Kp_{0,2}$ 80-90°C |
| 8 | " | t-$C_4H_9$ | " | " | " | " | |
| 9 | $C_2H_5$ | sek.-$C_4H_9$ | O | " | " | " | |
| 10 | $CH_3$ | n-$C_3H_7$ | O | " | " | " | |
| 11 | $C_2H_5$ | i-$C_4H_9$ | S | " | " | " | $Kp_{0,2}$ 80°C |
| 12 | $CH_3$ | sek.-$C_4H_9$ | O | " | " | " | |
| 13 | " | n-$C_3H_7$ | S | " | " | " | $Kp_{0,1}$ 66-74°C |

**Patentansprüche**

1. α-Cyano-(di)thiophosphonsäureester der allgemeinen Formel (I)

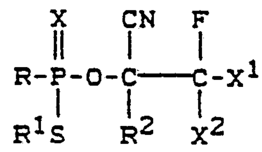

(I)

in welcher
X für Sauerstoff oder Schwefel steht,
R und $R^1$ gleich oder verschieden sind und für Alkyl stehen,
$R^2$ für Wasserstoff oder gegebenenfalls substituiertes Alkyl steht und
$X^1$ und $X^2$ gleich oder verschieden sind und für Halogen, Wasserstoff oder gegebenenfalls substituiertes Alkyl stehen.

2. Verbindungen der allgemeinen Formel (I) gemäß Anspruch 1, in welcher
X für Sauerstoff oder Schwefel steht,
R und $R^1$ gleich oder verschieden sind und für Alkyl mit 1 bis 6 Kohlenstoffatomen stehen,
$R^2$ für Wasserstoff oder gegebenenfalls durch Halogen substituiertes Alkyl mit 1 bis 6 Kohlenstoffatomen steht und
$X^1$ und $X^2$ gleich oder verschieden sind und für Halogen oder gegebenenfalls substituiertes Alkyl mit 1 bis 6 Kohlenstoffatomen stehen.

3. Verbindungen der allgemeinen Formel (I) gemäß Anspruch 1, in welcher
X für Sauerstoff oder Schwefel (vorzugsweise Schwefel)
R für Methyl oder Ethyl,
$R^1$ für n- oder i-Propyl oder für i-, s- oder t-Butyl steht,
$R^2$ für Wasserstoff, Methyl oder Ethyl (vorzugsweise Wasserstoff oder Methyl) und
$X^1$ und $X^2$ gleich oder verschieden sind und für Methyl oder Ethyl oder für Fluor stehen.

4. Verbindungen der Formeln

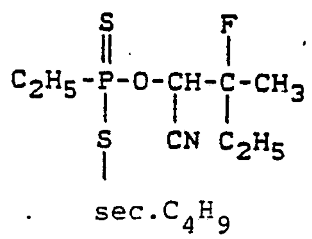

und

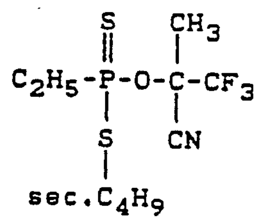

5. Verfahren zur Herstellung von α-Cyano-(di)thiophosphonsäureestern der allgemeinen Formel (I)

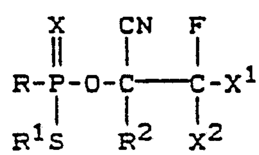

(I)

in welcher
X für Sauerstoff oder Schwefel steht,
R und $R^1$ gleich oder verschieden sind und für Alkyl stehen,
$R^2$ für Wasserstoff oder gegebenenfalls substituiertes Alkyl steht und
$X^1$ und $X^2$ gleich oder verschieden sind und für Halogen, Wasserstoff oder gegebenenfalls substituiertes Alkyl stehen,
dadurch gekennzeichnet, daß man (Di)Thiophosphonsäureesterhalogenide der allgemeinen Formel (II)

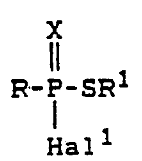

(II)

in welcher

R, $R^1$ und X die oben angegebene Bedeutung haben und

$Hal^1$ für Halogen steht,

mit β-Fluoralkanolderivaten der allgemeinen Formel (III)

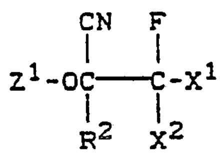

(III)

in welcher

$R^2$, $X^1$ und $X^2$ die oben angegebene Bedeutung haben und

$Z^1$ für Wasserstoff oder ein Äquivalent eines Alkalimetall- oder Ammoniumions steht,

gegebenenfalls in Gegenwart von Säureakzeptoren und gegebenenfalls in Gegenwart von Verdünnungsmitteln umsetzt.

6. Schädlingsbekämpfungsmittel, gekennzeichnet durch einen Gehalt an mindestens einer Verbindung der Formel (I) gemäß Anspruch 1 oder 5.

7. Verwendung von Verbindungen der Formel (I) gemäß Anspruch 1 oder 5 zur Bekämpfung von Schädlingen, insbesondere von Insekten, Spinnmilben und Nematoden.

8. Verfahren zur Bekämpfung von Schädlingen, dadurch gekennzeichnet, daß man Verbindungen der Formel (I) gemäß Anspruch 1 oder 5 auf die Schädlinge, vorzugsweise Insekten, Spinnmilben und Nematoden oder ihren Lebensraum einwirken läßt.

9. Verfahren zur Herstellung von Schädlingsbekämpfungsmitteln, dadurch gekennzeichnet, daß man Verbindungen der Formel (I) gemäß Anspruch 1 oder 5 mit Streckmitteln und/oder oberflächenaktiven Mitteln vermischt.

**Claims**

1. Cyano-(di)thiophosphonic acid esters of the general formula (I)

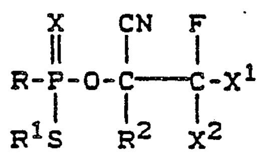

(I)

in which

X represents oxygen or sulphur,

R and $R^1$ are identical or different and represent alkyl,

$R^2$ represents hydrogen or optionally substituted alkyl and

$X^1$ and $X^2$ are identical or different and represent halogen, hydrogen or optionally substituted alkyl.

2. Compounds of the general formula (I) according to Claim 1,

in which

X represents oxygen or sulphur,

R and $R^1$ are identical or different and represent alkyl with 1 to 6 carbon atoms,

$R^2$ represents hydrogen or alkyl which has 1 to 6 carbon atoms and is optionally substituted by halogen and

$X^1$ and $X^2$ are identical or different and represent halogen or optionally substituted alkyl with 1 to 6 carbon atoms.

3. Compounds of the general formula (I) according to Claim 1,

in which

X represents oxygen or sulphur (preferably sulphur),

R represents methyl or ethyl,

$R^1$ represents n- or i-propyl, or represents i-, s- or t-butyl,

$R^2$ represents hydrogen, methyl or ethyl (preferably hydrogen or methyl) and

$X^1$ and $X^2$ are identical or different and represent methyl or ethyl, or represent fluorine.

4. Compounds of the formulae

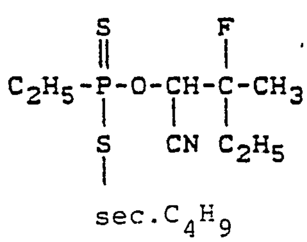

and

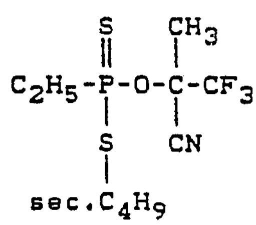

5. Process for the preparation of -cyano-(di)thiophosphonic acid esters of the general formula (I)

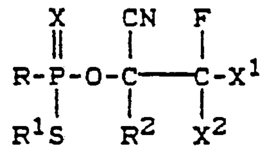

(I)

in which

X represents oxygen or sulphur,

R and $R^1$ are identical or different and represent alkyl,

$R^2$ represents hydrogen or optionally substituted alkyl and

$X^1$ and $X^2$ are identical or different and represent halogen, hydrogen or optionally substituted alkyl,

characterized in that (di)thiohalogenophosphonates of the general formula (II)

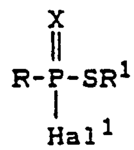

(II)

in which

R, $R^1$ and X have the abovementioned meaning and

$Hal^1$ represents halogen,

are reacted with -fluoroalkanol derivatives of the general formula (III)

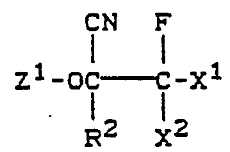

(III)

in which

$R^2$, $X^1$ and $X^2$ have the abovementioned meaning and

$Z^1$ represents hydrogen or one equivalent of an alkali metal or ammonium ion,

if appropriate in the presence of acid acceptors and if appropriate in the presence of diluents.

6. Agents for combating pests, characterized in that they contain at least one compound of the formula (I) according to Claim 1 or 5.

7. Use of compounds of the formula (I) according to Claim 1 or 5 for combating pests, in particular insects, spider mites and nematodes.

8. Method of combating pests, characterized in that compounds of the formula (I) according to Claim 1 or 5 are allowed to act on the pests, preferably insects, spider mites and nematodes, or their environment.

9. Process for the preparation of agents for combating pests, characterized in that compounds of the formula (I) according to Claim 1 or 5 are mixed with extenders and/or surface-active agents.

**Revendications**

1. Esters alpha-cyano-(di)thiophosphoniques de formule générale I

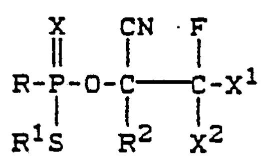

(I)

dans laquelle

X représente l'oxygène ou le soufre,

R et $R^1$, ayant des significations identiques ou différentes, représentent des groupes alkyle,

$R^2$ représente l'hydrogène ou un groupe alkyle éventuellement substitué, et

$X^1$ et $X^2$, ayant des significations identiques ou différentes, représentent des halogènes, l'hydrogène ou des groupes alkyle éventuellement substitués.

2. Composés de formule générale I selon la revendication 1,

dans laquelle

X représente l'oxygène ou le soufre,

R et $R^1$, ayant des significations identiques ou différentes, représentent chacun un groupe alkyle en $C_1$-$C_6$,

$R^2$ représente l'hydrogène ou un groupe alkyle en $C_1$-$C_6$ éventuellement substitué par des halogènes, et

$X^1$ et $X^2$, ayant des significations identiques ou différentes, représentent des halogènes ou des groupes alkyle en $C_1$-$C_6$ éventuellement substitués.

3. Composés de formule générale I selon la revendication 1,
dans laquelle

X représente l'oxygène ou le soufre (de préférence le soufre)

R représente un groupe méthyle ou éthyle,

$R^1$ représente un groupe n- ou iso-propyle ou un groupe iso-, sec- ou tert-butyle,

$R^2$ représente l'hydrogène, un groupe méthyle ou éthyle (de préférence l'hydrogène ou un groupe méthyle), et

$X^1$ et $X^2$, ayant des significations identiques ou différentes, représentent des groupes méthyle ou éthyle ou le fluor.

4. Composés de formules

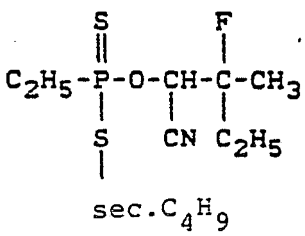

et

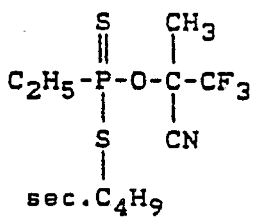

5. Procédé de préparation des esters alpha-cyano-(di)thiophosphoniques de formule générale I

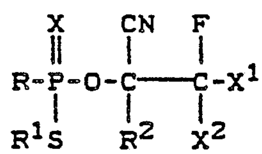

(I)

dans laquelle

X représente l'oxygène ou le soufre,

R et $R^1$, ayant des significations identiques ou différentes, représentent chacun un groupe alkyle,

$R^2$ représente l'hydrogène ou un groupe alkyle éventuellement substitué, et

$X^1$ et $X^2$, ayant des significations identiques ou différentes, représentent des halogènes, l'hydrogène ou des groupes alkyle éventuellement substitués,

caractérisé en ce que : on fait réagir des halogénures-esters (di)thiophosphoniques de formule générale II

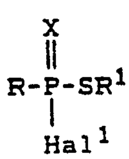

(II)

dans laquelle

R, $R^1$ et X ont les significations indiquées ci-dessus, et

$Hal^1$ représente un halogène,

avec des dérivés de bêta-fluoralcanols de formule générale III

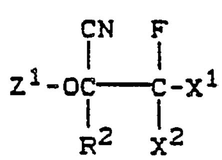

(III)

dans laquelle

$R^2$, $X^1$ et $X^2$ ont les significations indiquées ci-dessus, et

$Z^1$ représente l'hydrogène ou un équivalent d'un métal alcalin ou d'un ion ammonium,

éventuellement en présence de capteurs d'acides et éventuellement en présence de diluants.

6. Produit pesticide, caractérisé en ce qu'il contient au moins un composé de formule I selon la revendication 1 ou 5.

7. Utilisation des composés de formule I selon la revendication 1 ou 5 dans la lutte contre les parasites, en particulier les insectes, les acariens et les nématodes.

8. Procédé pour combattre les parasites, caractérisé en ce que l'on fait agir des composés de formule I selon la revendication 1 ou 5 sur les parasites, de préférence des insectes, des acariens et des nématodes, ou leur habitat.

9. Procédé de préparation de produits pesticides, caractérisé en ce que l'on mélange des composés de formule I selon la revendication 1 ou 5 avec des diluants et/ou des agents tensioactifs.